(19) Europäisches Patentamt

European Patent Office

Office européen des brevets

(11) **EP 1 278 370 A1**

(12) **DEMANDE DE BREVET EUROPEEN**

(43) Date de publication:
**22.01.2003 Bulletin 2003/04**

(51) Int Cl.⁷: **H04N 3/233**

(21) Numéro de dépôt: **02077767.8**

(22) Date de dépôt: **09.07.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **17.07.2001 FR 0109551**

(71) Demandeur: **Koninklijke Philips Electronics N.V.
5621 BA Eindhoven (NL)**

(72) Inventeur: **Duranton, Marc
75008 Paris (FR)**

(74) Mandataire: **Chaffraix, Jean
Société Civile S.P.I.D.
156, Boulevard Haussmann
75008 Paris (FR)**

(54) **Dispositif de correction de défauts geometriques d'un tube cathodique**

(57) L'invention concerne le domaine de la télévision numérique. Elle concerne plus particulièrement un dispositif de correction 11 de défauts géométriques d'un tube cathodique 10. Ce dispositif comprend des moyens d'ajustement 111 de facteurs numériques spatiaux, ces facteurs numériques spatiaux commandant un circuit numérique 112 de traitement spatial des images affichées sur l'écran 10. Ces moyens d'ajustement sont contrôlés par des signaux de commande 16, qui peuvent être générés par un utilisateur grâce à une télécommande 12 et une interface de commande 113. La correction peut également être automatique, lorsque les défauts sont dus à certaines caractéristiques de l'image à afficher, telle la brillance. Dans ce cas, des moyens de mesure 110 évaluent la brillance de l'image et génèrent un signal de commande 17 fonction de cette brillance.

FIG.1

EP 1 278 370 A1

## Description

DOMAINE TECHNIQUE

La présente invention concerne un dispositif de correction de défauts géométriques d'un tube cathodique destiné à afficher au moins une image de sortie. Elle concerne également un dispositif récepteur décodeur pour télévision.
Elle concerne enfin un récepteur de télévision comprenant au moins un tube cathodique destiné à afficher au moins une image de sortie.
L'invention trouve une application, par exemple, en télévision numérique terrestre.

ETAT DE LA TECHNIQUE ANTERIEURE

Le brevet US 5,258,693 publié le 2 Novembre 1993 décrit un dispositif de correction de défauts géométriques d'un tube cathodique. Un tube cathodique comprend classiquement un écran et un dispositif de déflection pour dévier un faisceau d'électrons, ledit faisceau d'électrons représentant un point d'une image sur l'écran du tube cathodique. Un tel dispositif de déflection comprend des bobines destinées à dévier ledit faisceau d'électrons horizontalement ou verticalement. Dans un tel tube cathodique, des défauts géométriques surviennent, par exemple du fait d'un mauvais alignement des bobines, du fait d'une non uniformité de champs magnétiques créés par lesdites bobines ou du fait de défauts de surface de l'écran du tube cathodique, ainsi que de l'influence de champs magnétiques externes. Dans le brevet cité ci-dessus, de tels défauts géométriques sont corrigés grâce à un dispositif de déflection auxiliaire, comprenant notamment des impédances et des résistances ajustables.

EXPOSE DE L'INVENTION

Un but de l'invention est de réduire l'encombrement d'un tube cathodique en s'affranchissant d'un dispositif de déflection auxiliaire pour corriger des défauts géométriques du tube cathodique.
L'invention prend en compte les considérations suivantes. Depuis quelques années, des systèmes de télévision numérique ont vu le jour. Ces systèmes de télévision numérique permettent de diffuser des programmes de télévision comprenant des images, par exemple par satellite, par câble ou par voie terrestre. Bon nombre de ces systèmes de télévision numérique proposent différents formats d'image, par exemple un format de définition standard et un format de haute définition. Par exemple, un standard de télévision numérique terrrestre ATSC américain, et un standard de télévision par satellite Japonais « BS-Digital » proposent 18 formats d'image différents. Les programmes diffusés sont reçus par un récepteur décodeur de télévision et visualisés sur un écran d'un tube cathodique. Cependant, les images peuvent être diffusées dans un format de haute définition et visualisées sur un écran de définition standard, ou inversement. Pour ce faire, le dispositif récepteur décodeur de télévision comprend un circuit numérique de traitement spatial d'un signal d'entrée représentant une image d'entrée, ledit circuit étant commandé par des facteurs numériques spatiaux. Ce circuit numérique de traitement spatial est notamment responsable de conversions d'un format d'image vers un autre, une telle conversion consistant, par exemple, en un dimensionnement ou un placement des images destinées à être visualisées sur l'écran. Un tel circuit numérique de traitement spatial utilise des filtres polyphases afin de déterminer des valeurs de pixels d'une image sous un format donné à partir des valeurs des pixels de l'image sous un autre format.
L'invention tire partie de tels circuits numériques de traitement spatial pour permettre la correction des défauts géométriques d'un tube cathodique. Pour ce faire, un dispositif de correction selon l'invention et tel que défini dans le paragraphe d'ouverture est caractérisé en ce qu'il comprend un circuit numérique de traitement spatial apte à convertir un signal d'entrée représentant une image d'entrée sous un premier format en un signal de sortie représentant l'image de sortie sous un deuxième format, grâce à des facteurs numériques spatiaux prédéterminés, et des moyens d'ajustement desdits facteurs numériques spatiaux, lesdits moyens d'ajustement étant contrôlés par des signaux de commande.
Ces moyens d'ajustement permettent de corriger des défauts géométriques d'un tube cathodique, en faisant varier certains facteurs numériques spatiaux commandant le circuit numérique responsable de la conversion de formats d'image. Ce circuit numérique permet ainsi la correction de défauts géométriques du tube cathodique. Le dispositif auxiliaire de déflection devient alors inutile. Par suite, l'encombrement du tube cathodique est réduit.
Dans un premier mode de réalisation particulièrement avantageux de l'invention, un dispositif de correction tel que décrit ci-dessus est caractérisé en ce que lesdits signaux de commande sont générés par un utilisateur grâce à une interface de commande. Selon ce mode de réalisation, un utilisateur peut lui-même corriger des défauts géométriques en faisant varier des facteurs numériques spatiaux. Une telle variation est effectuée, par exemple, grâce à une télécommande accordée sur une fréquence de réception desdits moyens d'ajustement.
Dans un deuxième mode de réalisation particulièrement avantageux de l'invention, un dispositif de correction tel que décrit ci-dessus est caractérisé en ce que lesdits signaux de commande sont fonction de caractéristiques de l'image à afficher.
Selon ce mode de réalisation, une correction automatique de défauts géométriques du tube cathodique est effectuée. En effet, certains défauts géométriques sont dus à des caractéristiques particulières des images affichées, par exemple une brillance relativement importante. Une mesure de brillance est effectuée par un circuit de mesure qui délivre un signal de commande fonction de la brillance mesurée.

Un tel dispositif de correction peut faire partie d'un dispositif récepteur décodeur pour télévision, physiquement séparé d'une enceinte contenant le tube cathodique. Dans un tel cas, l'utilisateur pourra contrôler les moyens d'ajustement grâce à une télécommande ou grâce à une interface située sur le dispositif récepteur décodeur pour télévision, ladite interface se présentant par exemple sous la forme de touches.

Un tel dispositif de correction peut également faire partie de l'enceinte contenant le tube cathodique et un dispositif récepteur décodeur de télévision, une telle enceinte étant communément désignée par le terme «récepteur de télévision numérique ». Dans un tel cas, des défauts géométriques du tube cathodique peuvent être corrigés lors d'une fabrication d'une telle enceinte. Des facteurs numériques correspondant à une telle correction sont alors stockés dans une mémoire non volatile pour être utilisés lors de l'affichage des images.

BREVE DESCRIPTION DES FIGURES

L'invention sera mieux comprise et d'autres détails apparaîtront dans la description qui va suivre en regard des dessins annexés qui sont donnés à titre d'exemples non limitatifs et dans lesquels :

- la figure 1 est un schéma bloc illustrant des caractéristiques d'un dispositif de correction selon l'invention ;
- la figure 2 illustre une conversion de formats effectuée par un circuit numérique faisant partie du dispositif de correction de la figure 1.
- la figure 3 illustre une correction d'un défaut de taille d'image par le dispositif de correction de la figure 1 ;
- les figures 4a et 4b illustrent un calibrage de facteur de zoom en fonction d'une caractéristique d'image, destiné à une correction automatique par le dispositif de correction de la figure 1 ;
- la figure 5 illustre une correction d'un défaut de centrage d'image par le dispositif de correction de la figure 1 ;
- la figure 6 illustre une correction d'une distorsion en trapèze par le dispositif de correction de la figure 1 ;
- la figure 7 illustre une correction d'une distorsion en coussin par le dispositif de correction de la figure 1 ;

EXPOSE DETAILLE D'AU MOINS UN MODE DE REALISATION DE L'INVENTION

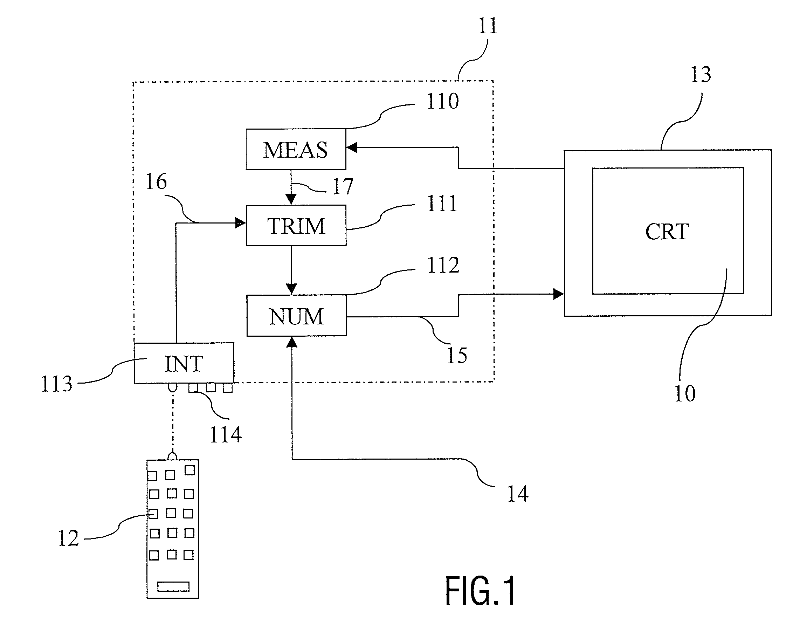

La figure 1 illustre un dispositif de correction selon l'invention. Un tel dispositif de correction 11 comprend des moyens de mesure 110, des moyens d'ajustement 111, un circuit numérique 112 et une interface de commande 113. Le dispositif de correction 11 est relié à un tube cathodique 10 et est commandé par une télécommande 12. Le tube cathodique 10 est contenu dans une enceinte 13.

Le circuit numérique 112 permet notamment d'effectuer une conversion d'un signal d'entrée 14 représentant une image d'entrée sous un premier format en un signal de sortie 15 représentant une image de sortie sous un deuxième format. Grâce à la télécommande 12 et à l'interface de commande 113, un utilisateur génère un premier signal de commande 16, qui est envoyé aux moyens d'ajustement 111. Il faut noter que l'utilisateur peut également générer le premier signal de commande 16 à partir de l'interface de commande 113 comprenant des touches de commande 114. Il faut également noter que la télécommande 12 peut être accordée sur une fréquence d'accord des moyens d'ajustement 111, auquel cas l'interface de commande 113 fait partie des moyens d'ajustement 111. En fonction du premier signal de commande 16, les moyens d'ajustement 111 font varier des facteurs numériques spatiaux commandant le circuit numérique 112, ce qui a pour effet de modifier le signal de sortie 15, dans le but de corriger des défauts du tube cathodique 10. Une telle correction sera détaillée sur les figures suivantes. Les moyens de mesure 110 peuvent également générer un deuxième signal de commande 17 pour contrôler les moyens d'ajustement 111. Dans un tel cas, le deuxième signal de commande 17 est fonction de caractéristiques d'une image affichée par le tube cathodique 10, par exemple la brillance.

Il faut noter que le dispositif de correction 11 peut faire partie d'un dispositif récepteur décodeur de télévision relié à l'enceinte 13, ou bien faire partie de l'enceinte 13.

Dans la description qui suit, le circuit numérique 112 considéré est un circuit commercialisé par la demanderesse sous le terme HDVO ; c'est un coprocesseur de vidéo haute définition d'un processeur de traitement numérique commercialisé sous la référence Nexperia PNX2700. Bien entendu, l'invention s'applique à d'autres circuits, dès lors que ces circuits sont responsables d'une conversion d'un format d'image vers un autre.

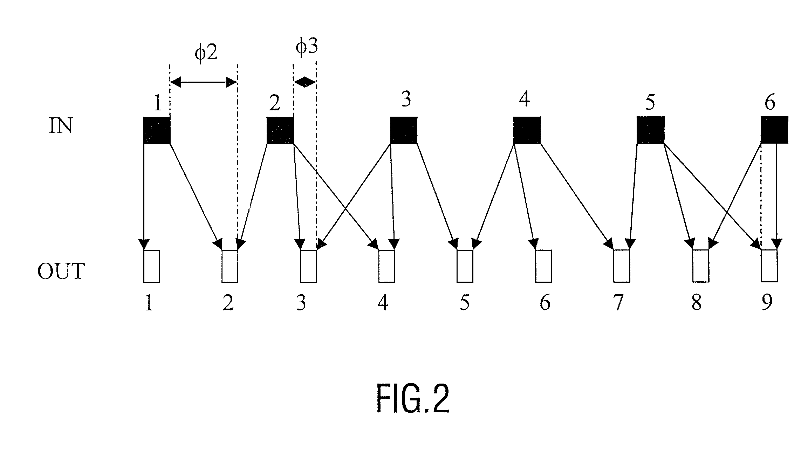

La figure 2 illustre une conversion de formats effectuée par le circuit numérique 112. Dans un circuit numérique tel le circuit 112, la conversion de format comprend un dimensionnement ainsi qu'un placement d'images. Un facteur de zoom horizontal zH et un facteur de zoom vertical zV contrôlent le dimensionnement d'image. Par exemple, une image de définition standard comprenant 480 lignes de 640 pixels peut être affichée sur un écran de plus haute définition comprenant 768 lignes de 1024 pixels. Pour convertir une ligne de 640 pixels en une ligne de 1024 pixels, le facteur de zoom horizontal zH est réglé à 1024/640=8/5. L'image obtenue après conversion est appelée image de sortie et l'image avant conversion image d'entrée. Sur une ligne donnée, le Nième pixel de l'image de sortie est désigné par OUT(N) et le Nième pixel de l'image d'entrée est désigné par IN(N). Sur la figure 2a, six pixels d'entrée IN(1) à IN(6) ont été représentés, ainsi que neuf pixels de sortie OUT(1) à OUT (9). Sur une ligne donnée, le pixel OUT(1) se situe à une même position que le pixel IN(1). La position du pixel OUT(2) par rapport au pixel IN(1), encore appelée phase du pixel OUT(2), est déterminée par le facteur de zoom horizontal zH. En effet, la phase $\phi2$ du pixel OUT(2) est égale à 1/zH, c'est à dire que la distance entre OUT(2) et IN(1) est égale à la distance entre IN(1) et IN(2), divisée par zH. De façon générale, pour obtenir la phase et la position du pixel OUT(N), on calcule (N-1)*(1/zH). Le résultat obtenu se décompose en une partie entière E et une partie décimale D. La partie entière E indique que le pixel OUT(N) se situe entre le pixel IN(E+1) et IN(E+2) et la partie décimale D est égale à la phase du pixel OUT(N).

Une valeur, valOUT(N) du pixel OUT(N), par exemple une valeur de luminance, est calculée grâce à l'expression suivante :

$$valOUT(N) = A*valIN(E+1)+B*valIN(E+2),$$

où les coefficients A et B dépendent de la phase du pixel OUT(N). Pour chaque phase, il existe un jeu de coefficients A et B différent ; ces coefficients sont déterminés lors d'une élaboration du circuit numérique 112 et sont stockés en mémoire dans une table. Cette table donne une correspondance entre une phase et un jeu de coefficients. Dans l'exemple de la figure 2, qui correspond à une conversion de lignes de 640 pixels en lignes de 1024 pixels, le facteur de zoom horizontal vaut 8/5, ce qui signifie qu'il y a huit phases différentes pour les 1024 pixels de l'image de sortie. Par conséquent, huit jeux de coefficients permettent de calculer les valeurs des pixels de l'image de sortie.

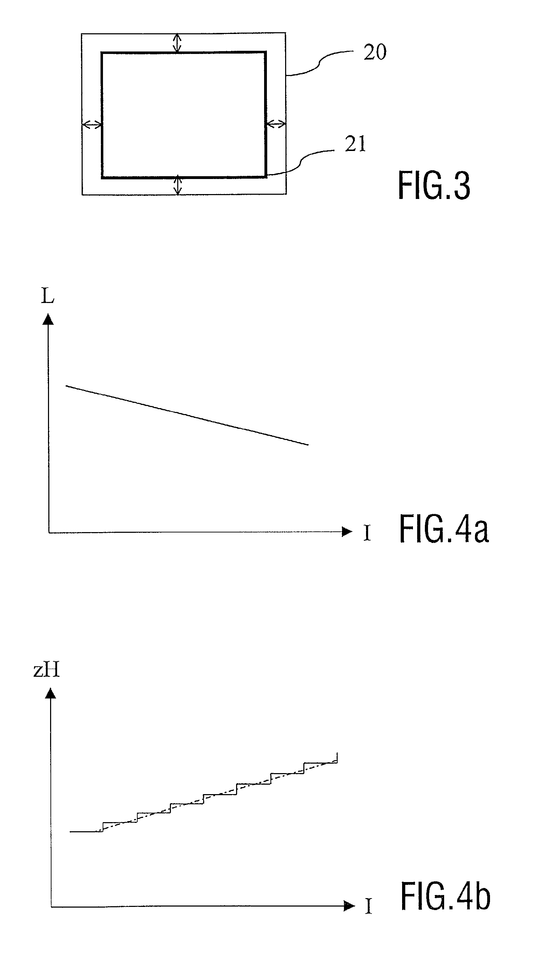

La figure 3 illustre une correction d'un défaut de taille d'image. Une image 21 affichée sur un écran 20 du tube cathodique 10 n'occupe pas tout l'écran 20, du fait de défauts géométriques du tube cathodique 10. Les facteurs de zoom sont stockés dans une mémoire du circuit numérique 112, sous la forme de mots de 16 bits, dont 12 correspondent à une partie décimale fractionnaire du facteur de zoom. Ainsi, une précision sur un facteur de zoom vaut 1/4096. Sur un écran de 1920 pixels de large, c'est à dire un écran haute définition, cette précision sur le facteur de zoom horizontal correspond donc à une précision d'environ un demi pixel. Par conséquent, en faisant varier les facteurs de zoom, il est possible de régler la taille de l'image 21 au pixel près. Le signal de commande généré par un utilisateur permet d'incrémenter ou de décrémenter les facteurs de zoom. En pratique, une des touches de la télécommande 12 ou de l'interface de commande 113 permet de faire augmenter une hauteur de l'image 21. Une pression sur cette touche génère un signal de commande ayant pour effet d'incrémenter le facteur de zoom vertical zV de 1/4096 par exemple. Ce facteur de zoom vertical zV est stocké dans un registre du circuit numérique 112, ainsi que l'incrément lié au signal de commande. Lorsque le circuit numérique 112 reçoit le signal de commande, un additionneur effectue une addition du zoom vertical zV avec cet incrément. Un résultat de cette addition est alors stocké dans le registre du circuit numérique 112, qui applique ce nouveau facteur de zoom vertical zV à l'image affichée sur le tube cathodique 10. L'utilisateur effectue plusieurs pressions sur cette touche jusqu'à ce que la taille de l'image 21 corresponde à la taille de l'écran 20. Il existe de même une touche permettant de faire diminuer la hauteur de l'image 21, ainsi que des touches pour augmenter ou diminuer une largeur de l'image 21. Dans cet exemple, les moyens d'ajustement 111 correspondent à un ensemble de circuits permettant, à partir du signal de commande, de modifier le facteur de zoom vertical zV. Les moyens d'ajustement 111 comprennent notamment un additionneur, un soustracteur et des moyens d'écriture d'un résultat dans un registre du circuit numérique 112.

Lorsque l'on modifie, par exemple, le facteur de zoom horizontal zH, les valeurs des pixels doivent être recalculées. Supposons que l'on augmente le facteur de zoom horizontal zH, de sorte qu'une image constituée de lignes de 640 pixels devienne une image constituée de lignes de 641 pixels. Dans un tel cas, il existe 641 phases différentes, ce qui nécessite le stockage de 640 jeux de coefficients, impliquant un encombrement relativement important de la mémoire du circuit numérique 112. En pratique, un filtre polyphase possède une mémoire interne limitée à 64 phases par exemple, auxquelles sont associés 64 jeux de coefficients. Un tel nombre de phases est suffisant car un oeil n'est pas sensible à des variations de moins de un soixante quatrième de pixel. On calcule la phase d'un pixel OUT(N) comme indiqué ci-dessus et, pour le calcul de la valeur de OUT(N), on prend le jeu de coefficient correspondant à la phase la plus proche de la phase calculée.

Les facteurs de zoom peuvent également être utilisés pour une correction automatique de défauts liés à des caractéristiques de l'image 21, par exemple une brillance. En effet, lorsqu'une image présente une brillance relativement importante, la taille de celle-ci peut être amenée à diminuer. Une mesure de courant pénétrant dans un canon à électrons du tube cathodique permet d'évaluer cette brillance. En fonction de cette mesure, un signal de commande est généré de manière à faire varier les facteurs de zoom. Ces facteurs de zoom peuvent être définis lors d'un calibrage de la taille de l'image 21 en fonction de la brillance, puis stockés dans une mémoire non volatile. Les figures 4a et 4b illustrent un tel calibrage. Lors d'une élaboration du tube cathodique 10, on mesure, pour une intensité donnée de courant dans le canon à électrons, la largeur de l'image 21. Cette mesure est répétée pour un certain nombre d'intensités de courant. On obtient ainsi la courbe de la figure 4a, qui présente, en ordonnée, la largeur de l'image 21 en fonction de l'intensité de courant en abscisse. Connaissant une largeur de l'écran 20 et la largeur de l'image 21, on effectue un rapport de ces deux quantités afin d'obtenir le facteur de zoom horizontal $z_H$ à appliquer pour une intensité de courant donnée. On obtient ainsi la courbe en pointillés de la figure 4b, qui présente, en ordonnée, le facteur de zoom $z_H$ à appliquer en fonction de l'intensité de courant en abscisse. Comme on ne peut faire varier le facteur de zoom horizontal $z_H$ de façon continue, on approche cette courbe en pointillés par une fonction en escalier, représentée en traits pleins sur la figure 4b. Cette fonction est ensuite stockée dans une mémoire non volatile des moyens de mesure 110. Ainsi, pour chaque mesure de brillance, un signal de commande est généré de manière à ajuster le facteur de zoom horizontal $z_H$ à la valeur définie par la fonction de la figure 4b. Un tel calibrage est effectué de la même façon pour le facteur de zoom vertical $z_V$.

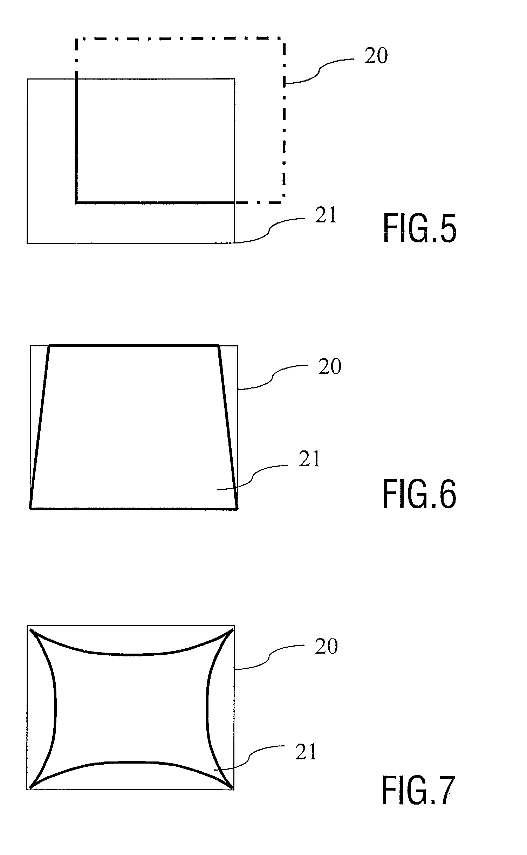

La figure 5 illustre une correction d'un défaut de centrage d'image. L'image 21 est décentrée par rapport à l'écran 20, de sorte qu'une partie de l'image 21 n'est pas affichée sur l'écran 20. Dans le circuit numérique 112, des facteurs numériques spatiaux de positionnement contrôlent le positionnement de l'image 21. Dans le cas du circuit HDVO, ces facteurs sont, entre autres :

- START_LINE_ACTIVE_VIDEO : assure le positionnement de la première ligne d'une image affichée sur l'écran 20.
- END_LINE_ACTIVE_VIDEO : assure le positionnement de la dernière ligne d'une image affichée sur l'écran 20.
- START_LINE_FIELD : assure le positionnement d'une première colonne de pixels d'une image affichée sur l'écran 20.

De la même façon qu'il est possible de faire varier les facteurs de zoom grâce aux moyens d'ajustement 111, il est possible de faire varier les facteurs numériques de positionnement, afin de centrer l'image 21 par rapport à l'écran 20. En pratique, une des touches de la télécommande 12 ou de l'interface de commande 113 permet de décaler l'image 21 verticalement. Une pression sur cette touche génère un signal de commande ayant pour effet de modifier le facteur START_LINE_ACTIVE_VIDEO de 1 pixel par exemple. Il existe de même une touche permettant de décaler l'image 21 horizontalement.

Dans certains formats de télévision, des bandes noires horizontales sont ajoutées de part et d'autre de l'image 21. Du fait de défauts géométriques du tube cathodique, il est possible que ces bandes noires ne soient pas symétriques. En faisant varier les facteurs numériques START_LINE_ACTIVE_VIDEO et END_LINE_ACTIVE_VIDEO, il est possible d'ajuster la symétrie de ces bandes noires.

La figure 6 illustre une correction d'une distorsion en trapèze. L'image 21 possède une forme de trapèze, due à une mauvaise symétrie des bobines assurant la déflection horizontale. Dans le circuit numérique 112, des facteurs de zoom variables sont utilisés, par exemple pour convertir une image d'un format 16/9 vers un format 4/3 sans perdre trop d'informations. A chaque pixel de l'image est associé un facteur de zoom horizontal et vertical, les facteurs de zoom pouvant différer d'un pixel à un autre. Ainsi, pour convertir une image d'un format 16/9 vers un format 4/3, les facteurs de zoom horizontaux des pixels situés dans une zone centrale de l'image sont proches de 1 et les facteurs de zoom horizontaux des pixels situés vers des bords d'images sont plus importants. De la sorte, l'image n'est pas trop déformée et il n'y a pas trop de pertes d'informations. Il est possible de tirer partie de ces facteurs de zoom variables pour corriger une distorsion en trapèze. Dans l'exemple de la figure 6, on diminue progressivement le facteur de zoom horizontal $z_H$ au fur et à mesure que l'on se déplace de haut en bas sur l'écran 20. Il faut noter que ces variations du facteur de zoom horizontal $z_H$ peuvent être définies dans un programme. En pratique, une pression sur une des touches de la télécommande 12 ou de l'interface de commande 113 génère un signal de commande ayant pour effet d'exécuter ce programme. Ainsi, à chaque pression sur cette touche, les facteurs de zoom des pixels situés en bas de l'écran 20 sont incrémentés de quantités relativement faibles alors que les facteurs de zoom des pixels situés en haut de l'écran 20 sont incrémentés de quantités plus importantes. L'utilisateur effectue plusieurs pressions sur cette touche jusqu'à obtenir une forme d'image 21 désirée.

La figure 7 illustre une correction d'une distorsion en coussin. L'image 21 possède une forme de coussin, due à un défaut de planéité de l'écran 20. Les facteurs de zoom variables permettent de corriger cette distorsion en coussin. Lorsque l'on se déplace de bas en haut de l'écran 20, le facteur de zoom horizontal est progressivement augmenté jusqu'au milieu de l'écran 20, puis progressivement diminué. Lorsque l'on se déplace de gauche à droite de l'écran 20, le facteur de zoom horizontal est progressivement augmenté jusqu'au milieu de l'écran 20, puis progressivement diminué. Ces variations des facteurs de zoom variables horizontaux et verticaux peuvent également être définies dans un programme. Comme il a été décrit sur la figure 6, une pression sur une des touches de la télécommande 12 ou de l'interface de commande 113 génère un signal de commande ayant pour effet d'exécuter ce programme. Ainsi, à chaque pression sur cette touche, les facteurs de zoom des pixels situés près des coins de l'écran 20 sont incrémentés de quantités relativement faibles alors que les facteurs de zoom des pixels situés dans les zones médianes de l'écran 20 sont incrémentés de quantités plus importantes. L'utilisateur effectue plusieurs pressions sur cette touche jusqu'à obtenir une forme d'image 21 désirée.

La description ci-dessus en référence aux figures illustre l'invention plutôt qu'elle ne la limite. A cet égard, quelques remarques sont faites ci-dessous.

La description des figures s'appuie sur l'exemple du circuit numérique HDVO. L'invention s'applique à d'autres circuits numériques responsables d'une conversion de formats d'image. Bien entendu, les appellations des facteurs numériques spatiaux peuvent varier d'un circuit à un autre, mais ces facteurs peuvent être utilisés sans s'éloigner de l'esprit de l'invention, dès lors qu'ils remplissent des fonctions similaires.

Sur la figure 2, un exemple de conversion de formats par le circuit numérique 112 a été décrit. Bien entendu, d'autres conversions peuvent être envisagées, sans s'éloigner de l'esprit de l'invention. Par exemple, pour le calcul de la valeur d'un pixel de l'image de sortie, un nombre différent de pixels d'entrée peut être pris en compte, par exemple trois, quatre ou d'avantage.

Sur les figures 3 à 7, des exemples de corrections de défauts géométriques d'un tube cathodique ont été détaillés. Bien entendu, l'invention ne se limite pas à ces seuls défauts. Par exemple, une correction de défauts de parallélisme peut également être effectuée grâce au dispositif de correction selon l'invention.

**Revendications**

**1.** Dispositif de correction de défauts géométriques d'un tube cathodique destiné à afficher au moins une image de sortie, ledit dispositif étant **caractérisé en ce qu'**il comprend :

- un circuit numérique de traitement spatial apte à convertir un signal d'entrée représentant une image d'entrée sous un premier format en un signal de sortie représentant l'image de sortie sous un deuxième format, grâce à des facteurs numériques spatiaux prédéterminés, et
- des moyens d'ajustement desdits facteurs numériques spatiaux, lesdits moyens d'ajustement étant contrôlés par des signaux de commande.

**2.** Dispositif de correction selon la revendication 1, **caractérisé en ce que** lesdits signaux de commande sont générés par un utilisateur grâce à une interface de commande.

**3.** Dispositif de correction selon la revendication 1, **caractérisé en ce que** lesdits signaux de commande sont fonction de caractéristiques de l'image à afficher.

**4.** Dispositif récepteur décodeur pour télévision comprenant un dispositif de correction de défauts géométriques selon la revendication 1.

**5.** Dispositif récepteur décodeur pour télévision selon la revendication 4, **caractérisé en ce que** lesdits signaux de commande sont générés par un utilisateur grâce à une interface de commande.

**6.** Dispositif récepteur décodeur pour télévision selon la revendication 4, **caractérisé en ce que** lesdits signaux de commande sont fonction de caractéristiques de l'image à afficher.

**7.** Récepteur de télévision comprenant au moins un tube cathodique destiné à afficher au moins une image de sortie ainsi qu'un dispositif de correction selon la revendication 1 destiné à corriger des défauts géométriques dudit tube.

**8.** Récepteur de télévision selon la revendication 7, **caractérisé en ce que** lesdits signaux de commande sont générés par un utilisateur grâce à une interface de commande.

**9.** Récepteur de télévision selon la revendication 7, **caractérisé en ce que** lesdits signaux de commande sont fonction de caractéristiques de l'image à afficher.

FIG.1

FIG.2

FIG.3

FIG.4a

FIG.4b

FIG.5

20

21

FIG.6

20

21

FIG.7

20

21

Office européen des brevets
Numéro de la demande
EP 02 07 7767

**RAPPORT DE RECHERCHE EUROPEENNE**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 764 297 A (SENGOKU YOSHINARI) 9 juin 1998 (1998-06-09) * colonne 7, ligne 23 - ligne 31 * | 1-9 | H04N3/233 |
| A | EP 0 821 519 A (TOKYO SHIBAURA ELECTRIC CO) 28 janvier 1998 (1998-01-28) * colonne 4, ligne 13 - ligne 30 * | 1 | |

**DOMAINES TECHNIQUES RECHERCHES (Int.Cl.7)**

H04N

Le présent rapport a été établi pour toutes les revendications

| Lieu de la recherche | Date d'achèvement de la recherche | Examinateur |
|---|---|---|
| LA HAYE | 19 septembre 2002 | Bequet, T |

EP 1 278 370 A1

**ANNEXE AU RAPPORT DE RECHERCHE EUROPEENNE
RELATIF A LA DEMANDE DE BREVET EUROPEEN NO.**  EP 02 07 7767

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2002

| Document brevet cité au rapport de recherche | | Date de publication | Membre(s) de la famille de brevet(s) | | Date de publication |
|---|---|---|---|---|---|
| US 5764297 | A | 09-06-1998 | JP | 7250256 A | 26-09-1995 |
| EP 0821519 | A | 28-01-1998 | JP | 10042163 A | 13-02-1998 |
| | | | CN | 1175156 A | 04-03-1998 |
| | | | DE | 69703188 D1 | 02-11-2000 |
| | | | DE | 69703188 T2 | 09-08-2001 |
| | | | DE | 821519 T1 | 13-08-1998 |
| | | | EP | 0821519 A2 | 28-01-1998 |
| | | | KR | 276490 B1 | 15-12-2000 |
| | | | US | 6002454 A | 14-12-1999 |